Europäisches Patentamt

European Patent Office

Office européen des brevets

(19)

(11) **EP 0 980 870 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(51) Int Cl.$^7$: **C07F 7/08**, C07F 7/12
// C07F3/02

(21) Anmeldenummer: **99112748.1**

(22) Anmeldetag: **01.07.1999**

(54) **Verfahren zur Herstellung von Silanen mit einer tertiären Kohlenwasserstoff-Gruppe in alpha-Position zum Silicium-Atom**

Process for preparing silanes substituted at position alpha of the silicon atom by a tertiary hydrocarbon group

Procédé de préparation de silanes ayant en position alpha de l'atome de silicium un groupe hydrocarboné tertiaire

(84) Benannte Vertragsstaaten:
**AT BE CH CY DE DK ES FI FR GB GR IE IT LI LU MC NL PT SE**

(30) Priorität: **20.08.1998 DE 19837906**

(43) Veröffentlichungstag der Anmeldung:
**23.02.2000 Patentblatt 2000/08**

(73) Patentinhaber: **Wacker-Chemie GmbH**
**81737 München (DE)**

(72) Erfinder:
• **Winterfeld, Joern, Dr.**
**84489 Burghausen (DE)**
• **Abele, Bors Cajus, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 405 560          EP-A- 0 542 250**
**EP-A- 0 656 363          US-A- 5 872 274**

• **DATABASE WPI Section Ch, Week 199706 Derwent Publications Ltd., London, GB; Class A25, AN 1997-061801 XP002900688 & JP 08 311083 A (NITTO KASEI CO LTD), 26. November 1996 (1996-11-26) -& CHEMICAL ABSTRACTS, vol. 126, no. 1, 1. Januar 1997 (1997-01-01) Columbus, Ohio, US; abstract no. 11807, XP002900689**
• **DATABASE WPI Section Ch, Week 199709 Derwent Publications Ltd., London, GB; Class A60, AN 1997-095476 XP002900690 & JP 08 333374 A (NITTO KASEI CO LTD), 17. Dezember 1996 (1996-12-17)**
• **DATABASE WPI Section Ch, Week 199649 Derwent Publications Ltd., London, GB; Class E11, AN 1996-493429 XP002900691 & JP 08 253487 A (NITTO KASEI CO LTD), 1. Oktober 1996 (1996-10-01)**

**Beschreibung**

Die Erfindung betrifft ein Verfahren zur Herstellung von Silanen mit einer tertiären Kohlenwasserstoff-Gruppe in $\alpha$-Position zum Silicium-Atom.

Die wohl am besten untersuchten und am meisten verwendeten Silane dieser Verbindungsklasse sind die Thexyl- und tert.- Butyl-substituierten Silane. Thexyl-substituierte Silane sind prinzipiell über Hydrosilylierungsreaktionen zwischen einer Si-H-Verbindung und 2,3-Dimethyl-2-buten zugänglich. Dies ist in EP-A-177 454 beschrieben. Es treten jedoch bei diesen Reaktionen durch Migration der Doppelbindung unerwünschte Nebenprodukte auf, die sich z.T. schwer abtrennen lassen.

In A. Shirata, Tetrahedron Lett. 30 (1989) 6393 ist die Herstellung von tert.-Butyl-substituierten Silanen durch Umsetzung von Halogensilanen mit tert.-Butylmagnesiumchlorid beschrieben, wobei Katalysatoren notwendig sind.

US 5,332,853 beschreibt die Synthese von tert.-Butylsilanen ausgehend von tert.-Butyllithium. Diese verläuft zwar mit recht guten Ausbeuten, ist aber aufgrund des hohen Preises des Lithiumalkyls wirtschaftlich wenig interessant. Darüber hinaus ist das Handling des pyrophoren tert.-Butyllithiums, selbst in stark verdünnter Lösung, im industriellen Maßstab aus Sicherheitsgründen äußerst aufwendig und schwierig.

Zur Steigerung der Ausbeute wurden bei Umsetzungen des preiswerteren Metallalkyls, tert.-Butylmagnesium-Grignard, mit Halogensilanen zu den entsprechenden tert.-Butylsilanen bereits verschiedene Metallsalze auf ihre katalytische Aktivität getestet. Befriedigende Ergebnisse konnten nach EP-A-405 560 mit Cyanid- oder Thiocyanat-haltigen Katalysatoren, wie Silbercyanid, Quecksilber(II)-cyanid, Kupfer(I)-cyanid, Natriumthiocyanat oder Kupfer(I)-thiocyanat erzielt werden, die jedoch große Sicherheits-, Umwelt- und Entsorgungsprobleme mit sich bringen. Zusätzlich weisen die über Cyanide und Thiocyanate dargestellten Silane meist einen unangenehmen Geruch auf, der die Qualität bzw. Einsatzfähigkeit des entsprechenden Silans mindern kann.

Bei Verwendung von weniger bedenklichen Halogenübergangsmetall-Katalysatoren lieferten bisher nur die in EP-A-542 250 beschriebenen Umsetzungen von Grignard-Verbindungen mit Wasserstoff-haltigen Chlorsilanen und die in EP-A-656 363 beschriebenen Umsetzungen von Grignard-Verbindungen mit mindestens drei Chloratome aufweisenden Chlorsilanen akzeptable Ausbeuten.

JP-A-08 311083, US-A-5,872,274, JP-A-08 333374 und JP-A-08 253487 beschreiben die Synthese von sterisch gehinderten Silanen mit Grignard Reagenzien in Polyalkylenglykoldialkylethern. Bei JP-A-08 311083 werden als Katalysatoren Cyano-, Thiocyanato- oder Acetylacetonat-Verbindungen und in US-A-5,872,274 werden als Katalysatoren Kupferverbindungen eingesetzt.

Aufgabe der Erfindung ist es, die Nachteile des Standes der Technik zu überwinden und ein einfaches sowie insbesondere wirtschaftliches Verfahren zur Herstellung von Silanen mit tertiären Kohlenwasserstoff-Gruppen in $\alpha$-Position zum Silicium-Atom ausgehend von Halogensilanen, die weniger als drei Halogenatome aufweisen, zur Verfügung zu stellen.

Gegenstand der Erfindung ist ein Verfahren zur Herstellung von Silanen der allgemeinen Formel 1

$$R_m R^1_n SiX_{4-m-n} \qquad\qquad (1),$$

durch Umsetzung von Grignard-Reagenzien der allgemeinen Formel 2

$$R^1 MgX^1 \qquad\qquad (2),$$

mit Silanen der allgemeinen Formel 3

$$R_m SiX_{4-m} \qquad\qquad (3),$$

**R**    gegebenenfalls mit Fluor, Chlor oder Cyanoresten substituierte $C_1$-bis $C_{10}$-Kohlenwasserstoffreste,

**R$^1$**    in $\alpha$-Position zum Silicium-Atom tertiäre, gegebenenfalls mit Fluor, Chlor oder Cyanoresten substituierte $C_4$-bis $C_{30}$-Kohlenwasserstoffreste,

**X und X$^1$**    jeweils Chlor, Brom oder Iod,

m    die Werte 2 oder 3 und

**n**    die Werte 1 oder 2 bedeuten,

in Anwesenheit von Übergangsmetall-Katalysator und Ethylenglykoldi-$C_1$-bis $C_{12}$-alkylether.

Die Silane der allgemeinen Formel 1 werden in hohen Ausbeuten und Reinheiten erhalten. Die Reaktionszeiten sind kurz. Toxikologische Aspekte bei der Auswahl des Katalysators und der chelatisierenden Verbindung können leicht berücksichtigt werden.

Beispiele für Kohlenwasserstoffreste **R** sind Alkylreste, wie der Methyl-, Ethyl-, n-Propyl-, Isopropyl, n-Butyl- und sec.- Butylrest sowie Octadecylreste; Alkenylreste, wie der Vinylrest; Cycloalkylreste, wie der Cyclohexylrest und Methylcyclohexylreste; Arylreste, wie der Phenylrest; Aralkylreste, wie der Benzylrest, Phenylethylreste, Phenylnonylreste und 2-Phenylpropylreste und Alkarylreste, wie Tolylreste.

Beispiele für substituierte Kohlenwasserstoffreste **R** sind insbesondere halogenierte Kohlenwasserstoffreste, wie der 3,3,3-Trifluorpropylrest, der 3,3,4,4,5,5,6,6,6-Nonafluorhexylrest und o-, p- und m-Chlorphenylreste.

Bevorzugte Reste **R** sind $C_1$- bis $C_6$-Alkylreste und Phenylreste.

$R^1$ ist vorzugsweise ein tertiärer Kohlenwasserstoffrest der Formel $-CR^2_3$, in der $R^2$ unabhängig voneinander die Bedeutungen von **R** aufweisen. Vorzugsweise sind die Reste $R^2$ $C_1$- bis $C_6$-Alkylreste, insbesondere Methyl- und Ethylreste und $C_1$- bis $C_6$-Alkylenphenylreste.

Bevorzugte Beispiele für Reste $R^1$ sind die tert.-Butyl-, 1,1-Dimethylpropyl- oder 1,1-Diethylpropylreste und der 1,1-Dimethyl-2-phenylethylrest.

Bevorzugte Beispiele für Silane der allgemeinen Formel 1 sind tert.-Butyldimethylchlorsilan, tert.-Butyldiethylchlorsilan, tert.-Butyldi-n-butylchlorsilan, tert.-Butyl-n-decylmethylchlorsilan, tert.- Butyl(cylohexylmethyl)methylchlorsilan, tert.- Butyldiphenylchlorsilan, tert.-Butylmethylphenylchlorsilan, 1,1-Dimethylbenzyldimethylchlorsilan, und 1,1-Dimethylpropyldimethylchlorsilan.

Bevorzugte Beispiele für Grignard-Reagenzien der allgemeinen Formel 2 sind tert.-Butylmagnesiumchlorid, tert.- Butylmagnesiumbromid, 1,1-Dimethylpropylmagnesiumchlorid, 1,1-Diethylpropylmagnesiumchlorid und 1,1-Dimethyl-2-phenylethylmagnesiumchlorid.

Bevorzugte Beispiele für das Silan der allgemeinen Formel 3 sind Dimethyldichlorsilan, Diethyldichlorsilan, Di-n-butyldichlorsilan, n-Decylmethyldichlorsilan, (Cyclohexylmethyl)methyldichlorsilan, Diphenyldichlorsilan oder Ethylphenyldichlorsilan.

Als Übergangsmetall-Katalysatoren können bevorzugt Kupfer-Verbindungen in der Oxidationsstufe +1, wie Kupfer(I)-chlorid, Kupfer(I)-bromid, Kupfer(I)-iodid oder Kupfer(I)-oxid, Kupfer-Verbindungen in der Oxidationsstufe +2, wie Kupfer(II)-chlorid, Kupfer(II)-methoxid, Kupfer(II)-acetat oder Kupfer(II)-acetylacetonat und Zink-Verbindungen, wie Zinkchlorid, Zinkbromid, Zinkacetylacetonat oder der Zinkchlorid-Diethylether-Komplex eingesetzt werden.

Die zusätzliche Aktivierung erfolgt durch den inerten aprotischen und chelatisierenden Ethylenglykoldi-$C_1$- bis $C_{12}$-alkylether. Diese Verbindungen können einzeln oder in Gemischen zugesetzt werden.

Bei den verwendeten inerten, aprotischen, chelatisierenden Glykolethern handelt es sich vorzugsweise um offenkettige Ethylenglykoldi-$C_1$-bis $C_6$-alkylether, wie Ethylenglykoldimethylether.

Insbesondere weisen die Glykolether Methyl-, Ethyl-, Propyl- oder Butylreste auf.

Das Grignard-Reagenz und das Silan der allgemeinen Formel 3 werden im Molverhältnis von 0.5 : 1.0 bis 1.0 : 0.5, bevorzugt im Verhältnis 1.0 : 0.8 bis 1.0 : 1.0 miteinander umgesetzt.

Der Übergangsmetall-Katalysator wird bevorzugt in einer Menge von 0.01 bis 10 Mol-%, bezogen auf das Grignard-Reagenz, besonders bevorzugt in einer Menge von 0.1 bis 2 Mol-%, zugegeben.

Die chelatisierende Verbindung Ethylenglykoldi-$C_1$-bis $C_{12}$-alkylether wird in einer Menge von 1-20 Äquivalenten, bezogen auf das Grignard-Reagenz, bevorzugt in einer Menge von 1-8 Äquivalenten, zugegeben. Der hohe Überschuß an der chelatisierenden Verbindung dient als Verdünnungsmittel, um eine gute Rührbarkeit der Reaktionsmischung durch ausfallendes Magnesiumhalogenid zu gewährleisten. Lösungsmittel wie beispielsweise unpolare Alkane oder Aromaten sind also nicht notwendig, aber auch nicht störend.

Die Reaktion wird bevorzugt bei einer Temperatur von -30 bis 160 °C, besonders bevorzugt von 0 bis 120 °C durchgeführt.

Wahlweise kann das Silan der allgemeinen Formel 1 durch Destillation als Reinsubstanz aus der Reaktionsmischung oder nach Zusatz eines geeigneten Solvens als entsprechende Lösung destilliert werden.

Die Silane der allgemeinen Formel 1 finden insbesondere bei der Silylierung von organischen Verbindungen für synthetische Zwecke, beispielsweise für Pharmazeutika und analytische Zwecke, Anwendung.

In den nachstehend beschriebenen Beispielen beziehen sich alle Angaben von Teilen und Prozentsätzen, falls nicht anders angegeben, auf das Gewicht. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Beispiel 1:

In einem 21-Dreihalskolben mit KPG-Rührer, Stockthermometer, Dimroth-Kühler, Tropftrichter unter Inertgasbeatmung werden 48.6 g (2.0 mol) Magnesium-Späne und eine Spatelspitze Iod vorgelegt. Durch Zugabe von 600 ml Ethylenglykoldimethylether und 203.7 g (2.2 mol) tert.-Butylchlorid wird das entsprechende Grignard-Reagenz, tert-Butylmagnesiumchlorid, hergestellt. Anschließend werden zunächst 5.2 g (0.02 mol) Kupfer(II)-acetylacetonat und dann bei 50 °C über 2 h 232.3 g (1.8 mol) Dimethyldichlorsilan zugetropft. Die Kolbeninnentemperatur steigt leicht an und es wird zur Vervollständigung der Umsetzung weitere 3 h bei 70 °C nachgerührt. Zur Abtrennung des ausgefallenen Magnesiumsalzes von der Lösung wird die Reaktionsmischung durch eine Argon-inertisierte Drucknutsche filtriert. Der Filterkuchen wird mit Ethylenglykoldimethylether nachgewaschen. Eine abschließende fraktionierte Destillation der vereinten Filtrate bei Normaldruck liefert 208.9 g tert.- Butyldimethylchlorsilan (77 %-Ausbeute bezogen Dimethylchlorsilan) als weißen kristallinen Feststoff in einer Reinheit von 95 % (nach $^1$H-NMR).

Beispiel 2: (nicht erfindungsgemäß)

Beispiel 1 wird mit der Abänderung wiederholt, daß anstelle von Ethylenglykoldimethylether andere inerte, aprotische, chelatisierende Glykolether verwendet werden. Die Ergebnisse dieser Untersuchungen sind in Tabelle 1 zusammengefaßt.

Tabelle 1

| Glykolether | Einsatzmenge [ml] | tert.-Butyldimethylchlorsilan-Ausbeute [%][1] |
|---|---|---|
| Diethylenglykoldimethylether | 800 | 71 |
| Diethylenglykoldibutylether | 800 | 67 |
| Triethylenglykoldimethylether | 800 | 70 |

[1] isolierte Ausbeute; Gehalt ≥ 95 % (nach $^1$H-NMR)

Beispiel 3:

Beispiel 1 wird mit der Abänderung wiederholt, daß anstelle von Kupfer(II)-acetylacetonat andere Übergangsmetall-Katalysatoren verwendet werden. Die Ergebnisse dieser Untersuchungen sind in Tabelle 2 zusammengefaßt.

Tabelle 2

| Übergangsmetall- Katalysator | Einsatzmenge [Mol-%] | tert.-Butyldimethylchlorsilan-Ausbeute [%][1] |
|---|---|---|
| Kupfer(I)-chlorid | 1 | 64 |
| Kupfer(I)-chlorid | 5 | 65 |
| Kupfer(I)-bromid | 1 | 70 |
| Kupfer(I)-iodid | 1 | 62 |
| Kupfer(I)-oxid | 1 | 27 |
| Kupfer(II)-acetylacetonat | 5 | 77 |
| Kupfer(II)-chlorid | 1 | 69 |
| Kupfer(II)-methoxid | 1 | 68 |
| Kupfer(II)-acetat | 1 | 64 |

[1] isolierte Ausbeute; Gehalt ≥ 95 % (nach $^1$H-NMR)

Beispiel 4:

Beispiel 1 wird mit der Abänderung wiederholt, daß dem Filtrat 280.0 g Toluol zugesetzt werden, um bei der nachfolgenden destillativen Aufarbeitung anstelle der Reinsubstanz die toluolische Lösung zu erhalten. Es werden 440.0 g der toluolischen tert. -Butyldimethylchlorsilan-Lösung mit einem tert.-Butyldimethylchlorsilan-Gehalt von 50 Gew.-% abdestilliert. Dies entspricht einer tert.- Butyldimethylchlorsilan-Ausbeute von 81 % bezogen Dimethyldichlorsilan.

Beispiel 5:

In einem 21-Dreihalskolben mit KPG-Rührer, Stockthermometer, Dimroth-Kühler, Tropftrichter unter Inertgasbeatmung werden 48.6 g (2.0 mol) Magnesium-Späne und eine Spatelspitze Iod vorgelegt. Durch Zugabe von 600 ml Ethylenglykoldimethylether und 203.7 g (2.2 mol) tert.-Butylchlorid wird tert-Butylmagnesiumchlorid hergestellt. Anschließend werden zunächst 5.2 g (0.02 mol) Kupfer(II)-acetylacetonat und dann bei 50 °C über 2 h 455.8 g (1.8 mol) Diphenyldichlorsilan zugetropft. Die Kolbeninnentemperatur steigt leicht an und es wird zur Vervollständigung der Umsetzung weitere 3 h bei 70 °C nachgerührt. Zur Abtrennung des ausgefallenen Magnesiumsalzes von der Lösung wird die Reaktionsmischung durch eine Argon-inertisierte Drucknutsche filtriert. Der Filterkuchen wird mit Ethylenglykoldimethylether nachgewaschen. Eine abschließende fraktionierte Destillation der vereinten Filtrate im Vakuum liefert 420.6 g tert.-Butyldiphenylchlorsilan (85 %-Ausbeute bezogen auf Diphenyldichlorsilan) als farblose Flüssigkeit in einer GC-Reinheit von 92 %.

**Patentansprüche**

1. Verfahren zur Herstellung von Silanen der allgemeinen Formel 1

$$R_m R^1_n SiX_{4-m-n} \tag{1},$$

durch Umsetzung von Grignard-Reagenzien der allgemeinen Formel 2

$$R^1 MgX^1 \tag{2},$$

mit Silanen der allgemeinen Formel 3

$$R_m SiX_{4-m} \tag{3},$$

wobei

| | |
|---|---|
| **R** | gegebenenfalls mit Fluor, Chlor oder Cyanoresten substituierte $C_1$-bis $C_{10}$-Kohlenwasserstoffreste, |
| **R¹** | in $\alpha$-Position zum Silicium-Atom tertiäre, gegebenenfalls mit Fluor, Chlor oder Cyanoresten substituierte $C_4$-bis $C_{30}$-Kohlenwasserstoffreste, |
| **X und X¹** | jeweils Chlor, Brom oder Iod, |
| **m** | die Werte 2 oder 3 und |
| **n** | die Werte 1 oder 2 bedeuten, |

in Anwesenheit von Übergangsmetall-Katalysator und Ethylenglykoldi-$C_1$-bis $C_{12}$-alkylether.

2. Verfahren nach Anspruch 1, bei dem **R¹** ein tertiärer Kohlenwasserstoffrest der Formel $-CR^2_3$ ist, in der **R²** $C_1$-bis $C_6$-Alkylreste, oder $C_1$-bis $C_6$-Alkylenphenylreste bedeutet.

3. Verfahren nach Anspruch 1 und 2, bei dem die Reste **R** $C_1$-bis $C_6$-Alkylreste oder Phenylreste sind.

4. Verfahren nach Anspruch 1 bis 3, bei dem als Übergangsmetall-Katalysatoren Kupfer-Verbindungen in der Oxidationsstufe +1, Kupfer-Verbindungen in der Oxidationsstufe +2 oder Zink-Verbindungen eingesetzt werden.

**Claims**

1. Process for the preparation of a silane of the general formula 1

$$R_m R^1_n SiX_{4-m-n} \tag{1}$$

by reaction of a Grignard reagent of the general formula 2

$$R^1MgX^1 \qquad (2)$$

with a silane of the general formula 3

$$R_mSiX_{4-m} \qquad (3)$$

wherein

| | |
|---|---|
| **R** | denotes $C_1$- to $C_{10}$-hydrocarbon radicals optionally substituted by fluorine, chlorine or cyano radicals, |
| **R$^1$,** | in the $\alpha$-position relative to the silicon atom, denotes tertiary $C_4$- to $C_{30}$-hydrocarbon radicals optionally substituted by fluorine, chlorine or cyano radicals, |
| **X and X$^1$** | each denote chlorine, bromine or iodine, |
| **m** | denotes the values 2 or 3 and |
| **n** | denotes the values 1 or 2, |

in the presence of a transition metal catalyst and ethylene glycol di-$C_1$- to $C_{12}$-alkyl ether.

2. Process according to Claim 1, in which **R$^1$** is a tertiary hydrocarbon radical of the formula -$CR^2_3$, in which the **R$^2$** denotes $C_1$- to $C_6$-alkyl radicals or $C_1$- to $C_6$-alkylenephenyl radicals.

3. Process according to Claims 1 and 2, in which the radicals **R** are $C_1$- to $C_6$-alkyl radicals or phenyl radicals.

4. Process according to Claims 1 to 3, in which a copper compound in oxidation level +1, a copper compound in oxidation level +2 or a zinc compound is employed as the transition metal catalyst.

**Revendications**

1. Procédé pour la préparation de silanes de formule générale 1

$$R_mR^1{}_nSiX_{4-m-n} \qquad (1)$$

par la réaction de réactifs de Grignard de formule générale 2

$$R^1MgX^1 \qquad (2)$$

avec des silanes de formule générale 3

$$R_mSiX_{4-m} \qquad (3)$$

où

| | |
|---|---|
| R | représente des radicaux hydrocarbonés en $C_1$-$C_{10}$ éventuellement substitués par le fluor, le chlore ou des radicaux cyano, |
| R$^1$ | représente des radicaux hydrocarbonés en $C_4$-$C_{30}$ tertiaires en position $\alpha$ par rapport à l'atome de silicium, éventuellement substitués par le fluor, le chlore ou des radicaux cyano, |
| X et X$^1$ | représentent chacun un atome de chlore, brome ou iode, |
| m | a la valeur 2 ou 3 et |
| n | a la valeur 1 ou 2, |

en présence d'un catalyseur à base d'un métal de transition et d'éther dialkylique en $C_1$-$C_{12}$ d'éthylèneglycol.

2. Procédé selon la revendication 1, dans lequel $R^1$ est un radical hydrocarboné tertiaire de formule $-CR^2_3$, dans laquelle $R^2$ représente des radicaux alkyle en $C_1$-$C_6$ ou des radicaux alkylène($C_1$-$C_6$)phényle.

3. Procédé selon les revendications 1 et 2, dans lequel les radicaux R sont des radicaux alkyle en $C_1$-$C_6$ où des radicaux phényle.

4. Procédé selon les revendications 1 à 3, dans lequel on utilise comme catalyseurs à base de métaux de transition des composés à base de cuivre au degré d'oxydation +1, des composés à base de cuivre au degré d'oxydation +2 ou des composés à base de zinc.